# EUROPÄISCHE PATENTSCHRIFT

(11) **EP 2 829 382 B1**
(45) Veröffentlichungstag und Bekanntmachung des Hinweises auf die Patenterteilung: **06.01.2016**
(21) Anmeldenummer: 14177899.3
(22) Anmeldetag: 21.07.2014
(51) Int. Cl.: B29C 53/84, B29C 65/18, B22F 3/11, C22C 1/08, H05B 3/00, B22F 7/00, B29C 65/00, B29C 65/20, B29C 65/30, B29C 65/78, B29C 53/04, H05B 3/24, B29C 35/00

(54) **Heizeinrichtung für die Plastifizierung von Werkstücken aus einem thermoplastischen Kunststoff**
Heating device for the plastification of workpieces made of a thermoplastic material
Dispositif de chauffage pour la plastification de pièces en matière plastique thermoplastique

(30) Priorität: 22.07.2013 DE 202013103272 U
(43) Veröffentlichungstag der Anmeldung: 28.01.2015
(73) Patentinhaber: Wegener International GmbH, 52249 Eschweiler (DE)
(72) Erfinder: Dietrich, Michael, D-52224 Stollberg (DE)
(74) Vertreter: Albrecht, Ralf

(56) Entgegenhaltungen:
- EP-A1- 0 456 121
- DE-U1- 8 536 431
- US-A- 3 176 116

## Beschreibung

Die Erfindung betrifft eine Heizeinrichtung für die Plastifizierung von Werkstücken aus einem thermoplastischen Kunststoff, wobei die Heizeinrichtung einen Heizkörper, z.B. in Form einer Heizplatte oder in Form eines Heizschwertes, aufweist, in dem zumindest ein Hohlraum vorgesehen ist, in den jeweils ein Heizelement eingesetzt ist. Die Erfindung betrifft ferner die Verwendung einer solchen Heizeinrichtung zur Plastifizierung von Werkstücken aus einem thermoplastischen Kunststoff sowie eine Maschine hierfür, die eine Werkstückaufnahme für das Werkstück bzw. die Werkstücke und eine Heizeinrichtung aufweist, die zumindest einen Heizkörper in Form eines Heizschwertes hat, welches zwischen einer Warteposition außerhalb des Bereichs der Werkstückaufnahme und einer Heizposition im Bereich der Werkstückaufnahme bewegbar geführt ist und welche zwei einander abgewandte Seitenflächen als Heizflächen aufweist.

Zur Plastifizierung von Werkstücken aus einem thermoplastischen Kunststoff sind Heizeinrichtungen bekannt, die einen flächigen Heizkörper rechteckigen oder kreisförmigen Umrisses aufweisen, der an einem Handgriff befestigt ist. Der Heizkörper weist Hohlräume auf, in die als Heizelemente Widerstandsheizstäbe eingesetzt sind, wobei die Temperaturregelung elektronisch oder thermostatisch erfolgt. Solche Heizeinrichtungen werden auch Handschweißspiegel genannt und dienen der Plastifizierung von Teilen eines Werkstückes aus thermoplastischem Kunststoff. Daneben sind Heizeinrichtungen zur Kontakt- oder Strahlungserhitzung bekannt, bei denen der Heizkörper die Form eines stab- oder balkenförmigen Heizschwertes hat.

Zur Verbindung der Stirnseiten von Kunststoffplatten sind Stumpfschweißmaschinen bekannt, wie sie beispielsweise der DE 92 14 573 U1 zu entnehmen sind. Eine solche Stumpfschweißmaschine hat einen lang gestreckten Grundrahmen, auf dessen Oberseite zwei sich jeweils in Längsrichtung parallel erstreckende Spanneinrichtung angeordnet sind. Diese Spanneinrichtungen sind in Querrichtung synchron, jedoch gegenläufig bewegbar und bestehen im Wesentlichen jeweils aus einem sich in Längsrichtung erstreckenden Spanntisch als Werkstückaufnahme und einem darüber angeordneten, sich ebenfalls in Längsrichtung erstreckenden und mit dem Spanntisch fest verbundenen Spannbalken, wobei jeder Spannbalken mit einer Vielzahl von in Längsrichtung nebeneinander angeordneten, auf den zugehörigen Spanntisch absenkbaren Spannplatten versehen ist.

Im Bereich zwischen den beiden Spanneinrichtungen ist ein sich in Längsrichtung erstreckendes Heizschwert für die Erhitzung der miteinander zu verbindenden Stirnseiten der Werkstücke angeordnet. Das Heizschwert kann zwischen einer Warteposition unterhalb der Spanntische, also unterhalb einer von den Spanntischen gebildeten Spannebene, und einer Heizposition bewegbar geführt, in der sich das Heizschwert auf Höhe der Spanntische und damit in der Spannebene erstreckt und dabei über die Ebene der Spanntische so weit hinausragt, dass die Stirnseiten der Werkstücke durch gegenläufige Bewegung der Spanntische an den Seitenflächen des Heizschwertes in Anlage gebracht werden können. Unterhalb des Heizschwertes ist zusätzlich ein Anschlagbalken vorgesehen.

Ein Schweißvorgang auf einer solchen Stumpfschweißmaschine wird dadurch eingeleitet, dass die Spanneinrichtungen gegen den in den Spalt eingefahrenen Anschlagbalken verfahren werden, wobei sie jeweils an verbreiterten Abschnitten zur Anlage kommen und auf diese Weise den Anschlagbalken zusätzlich ausrichten. Es werden dann die Werkstücke in die Spanneinrichtungen derart eingelegt, dass sie an den Anschlagbalken stoßen. Nach Festklemmen der Werkstücke - es kann sich auch um ein einzelnes, dann rohrförmiges Werkstück handeln - durch Absenken der Spannplatten gegen den jeweiligen Spanntisch werden die Spanneinrichtungen auseinandergefahren, und es wird das Heizschwert so weit abgesenkt, dass es in der Spannebene liegt. Die Spanneinrichtungen werden anschließend wieder zueinander bewegt, bis die Werkstücke mit ihren zu verbindenden Stirnseiten an dem Heizschwert anliegen. Die Stirnseiten werden dann an dem Heizschwert erhitzt und nach Wegfahren des Heizschwertes in die Warteposition unter Aufbringung eines Schließdruckes durch die Spanneinrichtungen gegeneinander gepresst. Nach dem Erkalten ist die Verbindung zwischen den Werkstücken fertig.

Maschinen zur thermischen Bearbeitung von Werkstücken aus thermoplastischem Kunststoff mithilfe zumindest eines Heizschwertes sind auch in Form von Biegemaschinen bekannt. Solche Biegemaschinen weisen als Werkstückaufnahme eine horizontale Werkstückauflage auf. Am Ende der Werkstückaufnahme befindet sich eine Biegeeinrichtung, die aus einer Klemmeinrichtung zum Festklemmen des nicht zu verbiegenden Teils des Werkstückes und einer schwenkbar gelagerten, leistenförmigen Biegewange besteht, mit der der umzubiegende Teil des Werkstückes durch Verschwenken der Biegewange aufwärts gebogen werden kann (vgl. DE 295 15 719 U1, DE 92 14 576 U1, EP 0 426 065 A2). Statt einer einzigen Biegewange kann die Werkstückaufnahme auch zwei gegenläufig arbeitende Biegewangen oder Biegeelemente aufweisen (vgl. EP 0 456 121 A1).

Der Biegeeinrichtung zugeordnet ist ein Heizschwert, das aus einer Warteposition im Abstand zum in der Werkstückaufnahme befindlichen Werkstück in eine Heizposition gebracht werden kann, in der das Heizschwert an der vorgesehenen Biegelinie Kontakt zu dem Werkstück hat. Nach Plastifizierung der Biegelinie wird die Biegewange verschwenkt und nimmt dabei dem umzubiegenden Teil des Werkstückes mit. Statt nur eines Heizschwertes können auch zwei gegenüberliegende Heizschwerter vorgesehen sein, um das Werkstück im Bereich der vorgesehenen Biegelinie von beiden Seiten zu erhitzen (vgl. EP 0 456 121 A1).

Die bekannten Heizeinrichtungen für die Plastifizierung von Werkstücken sind grundsätzlich unabhängig von ihrer Formgebung so ausgebildet, dass sie aus einem metallischen Massivmaterial hergestellt sind, in die als Hohlräume Hohlkanäle eingebohrt sind, in die Heizstäbe als Heizelemente eingesetzt sind (vgl. DE 89 05 287 U1 und DE 85 36 431 U1 und die darin beschriebenen Heizschwerter). Solche Heizkörper haben ein hohes Gewicht. Soweit es sich um handhabbare Heizeinrichtungen beispielsweise in Form von Handschweißspiegeln handelt, wird hierdurch die Handhabung erschwert. Außerdem ist die Größe solcher Handschweißspiegel aus Gewichtsgründen beschränkt. Soweit der Heizkörper als Heizschwert ausgebildet ist, sei es in handhabbaren Heizeinrichtungen, sei es in Stumpfschweißmaschinen oder Biegemaschinen, besteht das Problem darin, dass ihre Stabilität durch das hohe Gewicht beeinträchtigt ist, so dass es zu Verbiegungen aufgrund des Eigengewichts des Heizschwertes kommt, mit negativen Auswirkungen auf die Plastifizierung des Werkstückes.

Der Erfindung liegt also die Aufgabe zugrunde, eine Heizeinrichtung der eingangs genannten Art so auszubilden, dass sie bei hoher Stabilität ein deutlich geringeres Gewicht hat.

Diese Aufgabe wird erfindungsgemäß dadurch gelöst, dass der Heizkörper als Sandwichkörper ausgebildet ist, der eine Metallschaumschicht aufweist, die auf zumindest einer Seitenfläche, vorzugsweise auf zwei gegenüberliegenden Seitenflächen, mit einer Massivmetallschicht bedeckt ist, wobei der zumindest eine Hohlraum in der Metallschaumschicht eingeformt ist.

Grundgedanke der Erfindung ist es also, den Heizkörper aus einem metallischen Verbundwerkstoff in Form eines Sandwichkörpers aus einer Metallschaumschicht und zumindest einer Massivmetallschicht herzustellen und dabei den zumindest einen Hohlraum mit einem darin eingesetzten Heizelement in der Metallschaumschicht einzuformen. Das Heizelement kann jeweils ein an eine elektrische Stromquelle anschließbarer oder angeschlossener Widerstandsheizstab, aber auch ein von einem Heizmedium, z.B. Öl durchflossenes Heizrohr sein. Es hat sich gezeigt, dass sich hierdurch ein Heizkörper ergibt, der bei gleicher Stabilität deutlich leichter ist und deshalb auch bei langgestreckten Heizschwertern nicht zu einer Verformung führt. Bei handhabbaren Heizeinrichtungen wird die Bedienbarkeit wesentlich erleichtert, und es wird die Möglichkeit eröffnet, die Fläche des Heizkörpers bei gleichem Gewicht wesentlich zu vergrößern.

Die Herstellung solcher Verbundwerkstoffe bzw. Sandwichkörper kann beispielsweise der DE 20 2005 006 240 U1, DE 44 26 627 A1, DE 43 18 540 A1, EP 1 000 690 A2 und EP 0 997 215 A2 entnommen werden.

In Ausbildung der Erfindung ist vorgesehen, dass die Metallschaumschicht des Sandwichkörpers an zumindest einer der die Seitenflächen verbindenden Querflächen abgedeckt ist, um eine Konvektionsströmung in der Metallschaumschicht zu verhindern.

Der zumindest eine Hohlraum sollte in der Mittelebene zwischen den beiden Massivmetallschichten verlaufen, insbesondere wenn der Heizkörper ein Heizschwert darstellt. Dies schließt nicht aus, dass gerade auch bei Handschweißspiegeln eine Anordnung des oder der Hohlräume in Frage kommt, die asymmetrisch zur Mittelebene ist. Soweit mehrere Hohlräume mit darin angeordneten Heizelementen vorgesehen sind, ist die Anordnung zweckmäßigerweise gleichmäßig in einer zur Massivmetallschicht parallelen Ebene vorgesehen.

In besonders vorteilhafter Ausgestaltung der Erfindung ist vorgesehen, dass die Massivmetallschicht bzw. die Massivmetallschichten metallisch mit der Metallschaumschicht verbunden sind (vgl. DE 44 26 627 A1, DE 43 18 540 A1).

Als Material für die Metallschaumschicht und/oder die Massivmetallschicht bzw. die Massivmetallschichten kommen insbesondere solche Metalle in Frage, mit denen sich Schaumschichten herstellen lassen und die eine möglichst gute Wärmeleitung aufweisen, wie beispielsweise Aluminium bzw. Aluminiumlegierungen.

Soweit die jeweilige Heizeinrichtung mit dem thermoplastischen Material in Berührung kommt, empfiehlt es sich, dass die Massivmetallschicht bzw. die Massivmetallschichten an ihrer jeweiligen Außenseite mit einer Anti-Haft-Beschichtung versehen ist bzw. sind, beispielsweise aus PTFE oder aus einer Nickelbasishartlegierung (vgl. DE 89 05 278 U1).

Die Heizeinrichtung sollte mit einer Temperaturregelung versehen sein, insbesondere einer thermostatischen oder elektrischen Temperaturregelung, um die Temperatur des Heizkörpers konstant zu halten und/oder einstellen zu können. Dabei sollte in der Metallschaumschicht, vorzugsweise in dessen Mittelebene, ein Temperaturfühler angeordnet sein, der mit der Temperaturregelung verbunden ist. Die Temperaturregelung kann an einer Halterung des Sandwichkörpers angebracht sein. Die Halterung kann einen Handgriff zur Handhabung der Heizeinrichtung oder als Tischhalterung ausgebildet sein.

In weiterer Ausgestaltung der Erfindung ist vorgesehen, dass die Heizeinrichtung Teil einer Maschine zur thermischen Bearbeitung von Werkstücken aus thermoplastischem Kunststoff, insbesondere von Kunststoffplatten, ist, wobei die Maschine eine Werkstückaufnahme für das Werkstück bzw. die Werkstücke und zumindest ein Heizschwert aufweist, welches zwischen einer Warteposition außerhalb des Bereichs der Werkstückaufnahme und einer Heizposition im Bereich der Werkstückaufnahme bewegbar geführt ist und welches zwei einander abgewandte Seitenflächen sowie eine Ober- und eine Unterseite aufweist, wobei das Heizschwert den Sandwichkörper bildet. In einer solchen Maschine ist die Heizeinrichtung Teil der Maschine, wobei der Sandwichkörper als Heizschwert ausgebildet ist, also als langgestreckter Heizbalken, der in der Maschine zwischen einer Warte- und einer Heizposition hin- und herbewegbar ist.

Gegenstand der Erfindung ist ferner die Verwendung der erfindungsgemäßen Heizeinrichtung zur Plastifizierung von Werkstücken aus einem thermoplastischen Kunststoff.

Der Grundgedanke der Erfindung lässt sich verwirklichen in einer Maschine zur thermischen Bearbeitung von Werkstücken aus einem thermoplastischen Kunststoff, wobei die Maschine eine Werkstückaufnahme für das Werkstück bzw. die Werkstücke und eine Heizeinrichtung aufweist, die zumindest einen Heizkörper in Form eines Heizschwertes hat, welches zwischen einer Warteposition außerhalb des Bereichs der Werkstückaufnahme und einer Heizposition im Bereich der Werkstückaufnahme bewegbar geführt ist und welches zwei einander abgewandte Seitenflächen als Heizflächen aufweist, wobei diese Maschine erfindungsgemäß dadurch gekennzeichnet ist, dass die Heizeinrichtung so ausgebildet ist, wie im Einzelnen oben beschrieben.

In Sonderheit kann die Maschine als Stumpfschweißmaschine zum Verschweißen der Stirnseiten der Werkstücke ausgebildet sein, die mit zwei gegenüberliegenden, einen Spalt zwischen sich ausbildenden und relativ zueinander beweglichen Spanneinrichtungen zum Fixieren und zum Zusammenführen der zu verschweißenden Werkstücke in einer Spannebene ausgebildet ist, wobei das zumindest eine Heizschwert sich längs des Spaltes erstreckt und wobei sich das Heizschwert in der Warteposition außerhalb der Spannebene und in der Heizposition im Bereich der Spannebene befindet. Alternativ dazu kann die Maschine als Biegemaschine zum Biegen eines plattenförmigen Kunststoffwerkstückes um eine Biegelinie ausgebildet sein, wobei die Biegemaschine eine Biegeeinrichtung aufweist, der das zumindest eine Heizschwert derart zugeordnet ist, dass in der Heizposition das Kunststoffwerkstück im Bereich der Biegelinie erhitzbar ist.

In der Zeichnung ist die Erfindung anhand eines Ausführungsbeispiels näher veranschaulicht. Es zeigen:
- Figur 1: einen Querschnitt durch den Sandwichkörper einer Heizeinrichtung gemäß der vorliegenden Erfindung;
- Figur 2: eine stirnseitige Ansicht einer Stumpfschweißmaschine mit einer erfindungsgemäßen Heizeinrichtung, und
- Figur 3: eine stirnseitige Ansicht einer Biegemaschine mit der erfindungsgemäßen Heizeinrichtung.

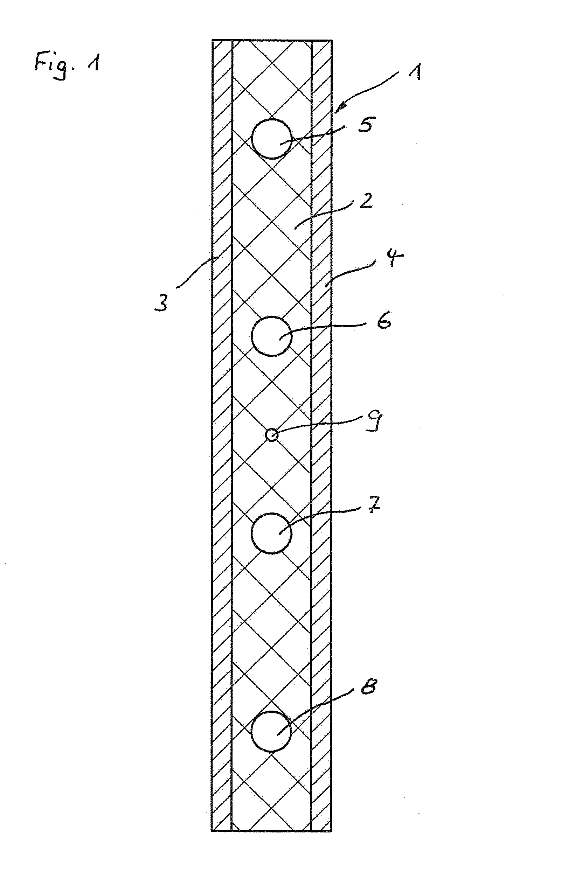

Der in Figur 1 dargestellte Sandwichkörper 1 ist dreischichtig aufgebaut. Er hat eine mittlere Metallschaumschicht 2, die auf den beiden gegenüberliegenden flächigen Seiten mit jeweils einer Massivmetallschicht 3, 4 bedeckt ist. Die Massivmetallschichten 3, 4 haben gleiche Dicke und sind mit der Metallschaumschicht 2 metallisch verbunden.

In der Mittelebene des Sandwichkörpers 1 und damit der Metallschaumschicht 2 sind in gleichem Abstand im Querschnitt gleichgroße Hohlkanäle 5, 6, 7, 8 eingeformt. Diese Hohlkanäle 5, 6, 7, 8 sind dazu bestimmt, dass in sie Widerstandsheizstäbe eingesetzt werden, mittels denen der Sandwichkörper 1 auf eine Temperatur erhitzt werden kann, die ausreicht, um die freien Oberflächen der Massivmetallschichten 3, 4 auf eine Temperatur zu bringen, welche bestimmungsgemäß eine Plastifizierung des jeweils zu behandelnden Kunststoffes bewirkt.

In der Mitte des Sandwichkörpers 1 ist ein weiterer, im Durchmesser gegenüber den Hohlkanälen 5, 6, 7, 8 reduzierter Hohlkanal 9 eingeformt. In diesen Hohlkanal 9 kann ein Temperatursensor platziert werden, der mit einer hier nicht dargestellten Temperaturregelung verbunden ist.

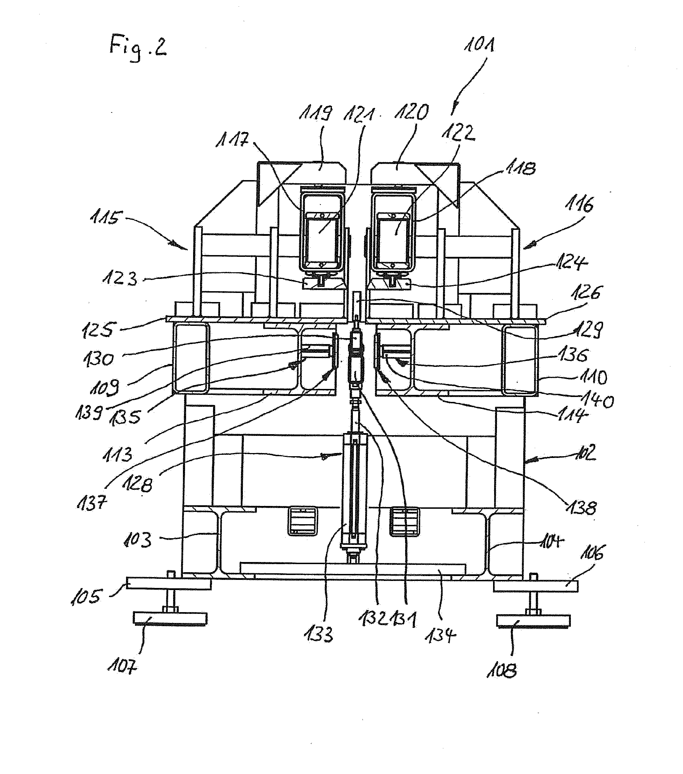

In Figur 2 ist eine Stumpfschweißmaschine 101 dargestellt, die einen sich senkrecht zur Zeichnungsebene lang erstreckenden Grundrahmen 102 hat, der sich untenseitig auf zwei sich ebenfalls senkrecht zur Zeichnungsebene erstreckenden I -Trägern 103, 104 abstützt. Deren Erstreckung ist im Wesentlichen gleich der Erstreckung des Grundrahmens 102. Die I-Träger 103, 14 stützen sich auf eine Mehrzahl von Fußplatten 105, 106 ab, die von darunter angeordneten Maschinenfüßen 107, 108 getragen werden.

Auf den Maschinenrahmen 102 aufgesetzt sind außenseitige Tischrohre 109, 110 rechteckigen Querschnitts, die sich senkrecht zur Zeichnungsebene über die gesamte Länge der Stumpfschweißmaschine 101 erstrecken. Im inneren Bereich verlaufen auf gleicher Höhe zwei als I-Träger ausgebildete Tischträger 113, 114, deren Erstreckung senkrecht zur Zeichnungsebene der der Tischrohre 109, 110 entspricht. Jeweils ein Paar aus Tischrohr 109, 110 und Tischträger 113, 114 bilden die Unterstützung einer der beiden Spanneinrichtungen 115, 116.

Die Spanneinrichtungen 115, 116 erstrecken sich senkrecht zur Zeichnungsebene über die gesamte Stumpfschweißmaschine 101. Sie weisen obenseitig Spannbalken 117, 118 auf, die als Hohlprofile mit rechteckigem Querschnitt ausgebildet sind und an Niederhaltern 119 bzw. 120 aufgehängt sind. Die Spannbalken 117, 118 verlaufen parallel zueinander auf gleicher Höhe. Innerhalb der Spannbalken 117, 118 sind über deren Länge gleichmäßig verteilt eine Vielzahl von Pneumatikzylindern 121, 122 angeordnet, an deren Kolbenstangen untenseitig jeweils ein Spannteller 123, 124 aufgehängt ist. Mithilfe der Pneumatikzylinder 121, 122 können die Spannteller 123, 124 vertikal aus der in Figur 2 dargestellten angehobenen Stellung in eine abgesenkte Stellung verfahren werden.

Untenseitig haben die Spanneinrichtungen 115, 116 jeweils den Spanntellern 123, 124 gegenüberliegende Spanntischplatten 125, 126. Jede dieser Spanntischplatten 125, 126 ruht verschieblich jeweils auf einem Paar, bestehend aus einem Tischrohr 109, 110 und einem Tischträger 113, 114. Die Spanntischplatten 125, 126 sind über die an ihnen befestigten Niederhaltern 119 bzw. 120 mit dem jeweils zugehörigen Spannbalken 117 bzw. 118 starr verbunden, bilden also mit diesem jeweils eine Einheit. Über hier nicht näher dargestellte Antriebseinrichtungen, wie sie beispielsweise in der DE 92 14 573 U1 im Einzelnen dargestellt ist, können die beiden Spanneinrichtungen 115, 116 synchron und jeweils in entgegengesetzten Richtungen horizontal aufeinander zu oder voneinander weg bewegt werden.

In der Mitte der Stumpfschweißmaschine 101 ist eine Heizschwerteinrichtung 128 angeordnet. Das obere Ende der Heizschwerteinrichtung 128 wird von einem im Querschnitt rechteckigen, langgestreckten Heizschwert 129 gebildet, das sich senkrecht zur Zeichnungsebene im Wesentlichen über die gesamte Erstreckung der beiden Spanneinrichtungen 115, 116 erstreckt. Das Heizschwert 129 ist als Sandwichkörper mit einem Querschnitt ausgebildet, wie er sich aus Figur 1 ergibt. Dabei bilden die dortigen Massivmetallschichten 103, 104 die vertikalen Seitenflächen des Heizschwertes 129.

Das Heizschwert 129 sitzt auf einem Anschlagbalken 130, dessen Längserstreckung dem des Heizschwertes 129 entspricht. Dieser wiederum ist aufgesetzt auf einen Tragholm 131, der auf mehreren, senkrecht zur Zeichnungsebene hintereinander angeordneten Führungsstangen 132 ruht, deren untere Enden jeweils mit einem Pneumatikzylinder 133 verbunden sind. Deren untere Enden stützen sich auf einer Rahmenplatte 134 ab, die an den I-Trägern 103, 104 befestigt ist. Durch pneumatische Beaufschlagung der Pneumatikzylinder 133 kann das Heizschwert 129 vertikal verfahren werden, wobei es seine horizontale Erstreckung beibehält.

An den Tischträgern 113, 114 sind Abdeckelemente 135, 136 befestigt, die spiegelbildlich und auf gleicher Höhe angeordnet sind. Jedes Abdeckelement 135, 136 weist eine Isolierleiste 137, 138 auf. Jede Isolierleiste 137, 138 erstreckt sich senkrecht zur Zeichnungsebene über die Länge des Heizschwertes 129. Die Isolierleisten 137, 138 sind jeweils über eine senkrecht zur Zeichnungsebene gleichmäßig verteilte Mehrzahl von Pneumatikzylindern 139, 140 mit den Tischträgern 113 bzw. 114 verbunden. Die Isolierleisten 137, 138 sind an den Kolbenstangen der Pneumatikzylinder 139, 140 befestigt. Mithilfe der Pneumatikzylinder 139, 140 können die Isolierleisten 137, 138 aus der in Figur 2 dargestellten Ausgangspositionen gegenläufig in eine Isolierposition und wieder zurück verfahren werden.

In den Darstellungen gemäß den Figur 2 befindet sich das Heizschwert 129 in der Heizposition zwischen den Spanntischplatten 125, 126 und ragt über diese nach oben heraus. Die Isolierleisten 137, 138 nehmen ihre Ausgangsposition ein.

Das Verschweißen von zwei Kunststoffplatten geschieht mithilfe der vorbeschriebenen Stumpfschweißmaschine 101 wie folgt.

Zunächst werden die Spanneinrichtungen 115, 116 mittels des hier nicht näher dargestellten Antriebes auseinandergefahren, sodass sie die in Figur 2 gezeigte Stellung einnehmen. Dann wird das Heizschwert 129 aus einer Warteposition, in der sich das Heizschwert unterhalb der Ebene der Spanntischplatten 125, 126 befindet, so weit hochgefahren, dass sich der untere verbreiterte Teil des Anschlagbalkens 130 auf Höhe der Spanntischplatten 125, 126 befindet. Diese Position ist also höher als die in Figur 2 dargestellte Position. Die Spanneinrichtungen 115, 116 werden dann so weit zusammengefahren, bis die gegenüberliegenden Stirnseiten der Spanntischplatten 125, 126 zur Anlage an dem Anschlagbalken 130 kommen. Über den Antrieb wird dann ein Schließdruck aufgebracht, der den Anschlagbalken 130 gerade ausrichtet.

Im Anschluss daran wird von beiden Seiten je eine Kunststoffplatte auf jeweils eine Spanntischplatte 125 bzw. 126 aufgelegt. Sie werden so weit vorgeschoben, bis sie an dem oberen, nicht verbreiterten Teil des Anschlagbalkens 130 zur Anlage kommen. Die Kunststoffplatten stehen dann über die Stirnseiten der Spanntischplatten 125, 126 jeweils ein Stück vor.

Nunmehr werden die Spannteller 123, 124 durch Druckbeaufschlagung der Pneumatikzylinder 121, 122 auf die Kunststoffplatten abgesenkt, sodass diese jeweils zwischen Spanntellern 123 bzw. 124 und jeweils einer Spanntischplatte 125 bzw. 126 eingeklemmt werden. Sie können sich dann nicht mehr relativ zu den jeweils betreffenden Spanneinrichtungen 115, 116 bewegen. Nach diesem Ausrichtvorgang werden die Spanneinrichtungen 115, 116 durch Betätigung des zugehörigen Antriebs wieder auseinandergefahren. Gleichzeitig werden Heizschwert 129 und Anschlagbalken 130 in die in Figur 2 gezeigte Stellung ein wenig abgesenkt, sodass das Heizschwert 129 in die Spannebene zwischen den Spanntischplatten 125, 126 zu liegen kommt. Dann werden die Spanneinrichtungen 115, 116 wieder einander angenähert, bis die Stirnseiten der eingelegten Kunststoffplatten an den Seitenflächen des Heizschwertes 129 anstoßen. Das Heizschwert 129 befindet sich auf einer Temperatur, die hoch genug ist, um die Stirnseiten der Kunststoffplatten zu plastifizieren. Ist dieser Zustand erreicht, werden die Spanneinrichtungen 115, 116 wieder ein Stück auseinandergefahren, und es wird das Heizschwert 129 durch entsprechende Druckbeaufschlagung der Pneumatikzylinder 133 in die Warteposition heruntergefahren. Dann werden die Spanneinrichtungen 115, 116 wieder so weit angenähert, dass die Stirnseiten der Kunststoffplatten mit einem bestimmten Schließdruck aufeinander gepresst werden. In der Warteposition werden die Isolierleisten 137, 138 durch entsprechende Druckbeaufschlagung der Pneumatikzylinder 139, 140 gegen die beiden Seitenflächen des Heizschwertes 129 angepresst, um sie thermisch zu isolieren.

Nach Erkalten der Schweißnaht werden die Spannteller 123, 124 unter entsprechender Druckbeaufschlagung der Pneumatikzylinder 121, 122 wieder in die in Figur 2 dargestellte Ausgangsposition angehoben. Die dann einheitliche Kunststoffplatte kann dann zur Seite hin aus der Stumpfschweißmaschine 101 entnommen werden.

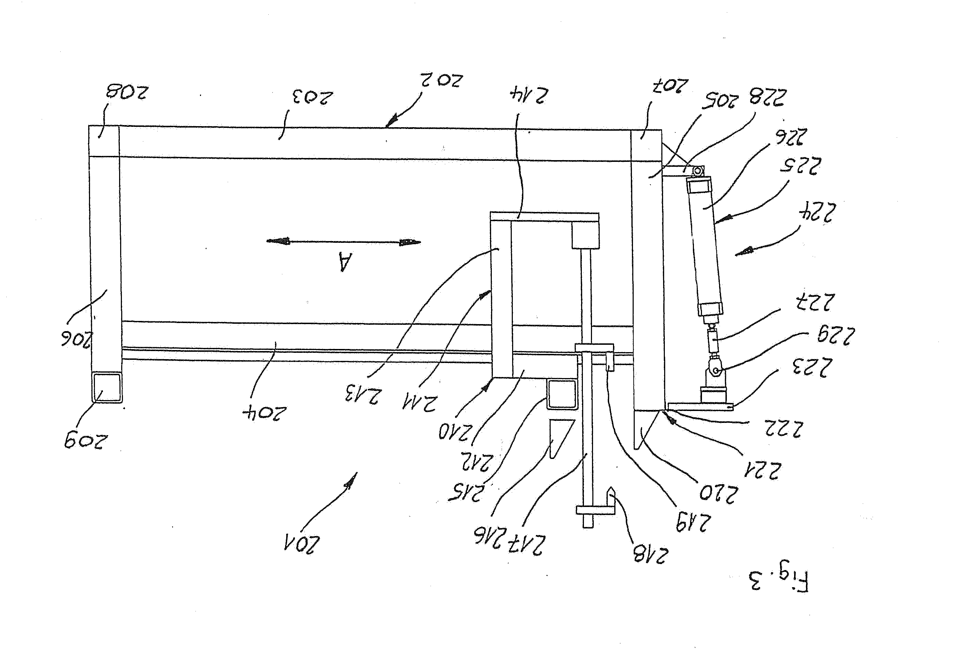

Die in Figur 3 dargestellte Biegemaschine 201 weist einen quaderförmigen Maschinenrahmen 202 auf, dessen Stirnseite in Figur 3 zu sehen ist. Er ist senkrecht zur Zeichnungsebene lang gestreckt, so dass sich die Längsrichtung des Maschinenrahmens 202 in dieser Richtung erstreckt. Zu sehen ist ein unterer Querholm 203 und ein oberer Querholm 204, der von einem vorderseitigen Vertikalholm 205 und einem rückseitigen Vertikalholm 206 getragen wird. Der untere Querholm 203 ist über einen vorderseitigen unteren Längsholm 207 mit dem vorderseitigen Vertikalholm 205 und über einen rückseitigen unteren Längsholm 208 mit dem rückseitigen Vertikalholm 206 verbunden. Beide unteren Längsholme 207, 208 erstrecken sich senkrecht zur Zeichnungsebene über die gesamte Länge der Biegemaschine 201. Im oberen Bereich sind ebenfalls Längsholme vorhanden, von denen hier nur der rückseitige obere Längsholm 209 zu sehen ist. Sämtliche vier Längsholme 207, 208 verlaufen horizontal bis zur anderen Stirnseite der Biegemaschine 201, wo sie mit den dortigen Vertikalholmen und Querholmen verbunden sind, die an dieser Stirnseite in gleicher Anordnung vorhanden sind wie an der hier dargestellten Stirnseite.

Auf der Oberseite der oberen Querholme 204 ist ein Wagen 210 in den Richtungen des Doppelpfeils A verschieblich geführt. An der hier sichtbaren Stirnseite hat der Wagen 210 einen U-förmigen Rahmen 211 mit einem oberen Horizontalschenkel 212 und einem damit durch einen Vertikalholm 213 verbundenen unteren Horizontalschenkel 214. Ein entsprechender Rahmen ist deckungsgleich an der anderen Stirnseite vorgesehen. Beide Rahmen 211 sind über einen sich horizontal und parallel zu dem rückseitigen oberen Längsholm 209 erstreckenden Klemmholm 215 verbunden, so dass die beiden Rahmen 211 mit dem Klemmholm 215 eine Einheit bilden.

Oberhalb des Klemmholms 215 verläuft in gleicher Länge und parallel zu ihm eine im Querschnitt dreiecksförmige Klemmleiste 216. Sie ist über hier nicht näher dargestellte Pneumatikdruckzylinder und Vertikalführungen gegenüber dem Klemmholm 215 anhebbar und in Richtung auf ihn absenkbar. Die Klemmleiste 216 ist Teil des Wagens 210, bleibt also bei Bewegung des Wagens 210 immer oberhalb des Klemmholms 215.

An dem unteren Horizontalschenkel 214 des Rahmens 211 ist eine sich vertikal nach oben erstreckende Führungsstange 217 befestigt. Eine entsprechende Führungsstange weist auch der an der anderen Stirnseite vorhandene Rahmen auf. An den Führungsstangen 217 sind ein oberes Heizschwert 218 und ein unteres Heizschwert 219 vertikal verschieblich geführt. Die Heizschwerter 218, 219 sind jeweils als Sandwichkörper mit einem Querschnitt, wie er in Figur 1 gezeigt ist, ausgebildet, wobei die sich jeweils vertikal erstreckenden Seitenflächen der Heizschwerter 218, 219 von den Massivmetallschichten 3, 4 (Figur 1) gebildet werden. Zusätzlich sind die einander zugewandten Stirnflächen der Heizschwerter 218, 219 mit Massivmetallschichten versehen.

Die Heizschwerter 218, 219 erstrecken sich parallel zu dem Klemmholm 215 und der Klemmleiste 216 über die gesamte Länge der Biegemaschine vom Rahmen 211 zu dem anderen Rahmen. Über hier nicht näher dargestellte Pneumatikdruckzylinder können die Heizschwerter 218, 219 vertikal verfahren werden, d.h. aus den gezeichneten Ausgangspositionen können das obere Heizschwert 218 nach unten und das untere Heizschwert 219 nach oben verfahren werden. Die Heizschwerter 218, 219 sind mit elektrischer Energie auf eine Temperatur erhitzbar, mit der es möglich ist, Werkstücke aus thermoplastischem Kunststoff von beiden Seiten linienförmig zu plastifizieren. Aufgrund der Befestigung an den unteren Horizontalschenkeln 214 sind die Führungsstangen 217 und damit die beiden Heizschwerter 218, 219 mit dem Wagen 210 in den Richtungen des Doppelpfeils A beweglich.

Die Oberseite des durch den vorderseitigen Vertikalholm 225 verdeckten, vorderseitigen oberen Längsholm bildet zusammen mit einer oberhalb dieser Oberseite angeordneten Klemmleiste 220 eine gerätefeste Klemmeinrichtung 221. Die Oberseite des vorderseitigen oberen Längsholms liegt auf gleicher Höhe wie die Oberseite des Klemmholms 215 am Wagen 210. Die Klemmleiste 220 ist mittels hier nicht näher dargestellter Pneumatikdruckzylinder vertikal verfahrbar. Die Klemmleiste 220 erstreckt sich senkrecht zur Zeichnungsebene und parallel zu dem gegenüberliegenden Längsholm in etwa über die gesamte Länge der Biegemaschine 201. In Offenstellung kann eine Kunststoffplatte zwischen die Klemmleiste 220 und die Oberseite des gegenüberliegenden Längsholms eingespannt werden.

An der Vorderkante des vorderseitigen oberen Längsholms ist über ein sich horizontal erstreckendes Schwenkgelenk 222 eine Biegewange 223 angebracht. Sie erstreckt sich im Wesentlichen über die Breite des Maschinenrahmens 202. In der gezeigten Ausgangsstellung ist ihre Oberfläche waagerecht und bündig mit der Oberseite des vorderseitigen oberen Längsholms. Sie kann aus dieser Stellung in eine vertikale Stellung verschwenkt werden.

Für die Verschwenkung der Biegewange 223 ist ein Schwenkantrieb 224 vorgesehen. Zu diesem Schwenkantrieb 224 gehören drei Antriebsdruckzylinder, die gleichmäßig über die Länge (senkrecht zur Zeichnungsebene) der Biegewange 223 verteilt sind und von denen hier nur der in dieser Ansicht erste Antriebsdruckzylinder 225 zu sehen ist. Jeder Antriebsdruckzylinder 225 weist ein Zylindergehäuse 226 auf, aus dem nach oben eine Kolbenstange 227 herausragt. Die Zylindergehäuse 226 sitzen untenseitig jeweils gelenkig auf einer Stützkonsole 228, welche am Maschinenrahmen 202 befestigt ist. Die Kolbenstangen 227 sind über Gelenke 229 mit der Unterseite der Biegewange 223 verbunden. Durch Ausfahren der Kolbenstangen 227 kann die Biegewange 223 aus der gezeigten Ausgangsposition um einen gewünschten Biegewinkel verschwenkt werden.

Ein Biegevorgang mit der Biegemaschine 201 gemäß Figur 3 gestaltet sich wie folgt.

Zunächst wird der Wagen 210 von einem Bedienpult her in die gezeigte vordere Endstellung gebracht, um für die Steuereinrichtung eine Null-Lage zu definieren. Die Klemmleisten 216, 220 befinden sich in einer angehobenen Ausgangsstellung. Ferner wird die Biegewange 223 gegenüber der in Figur 3 gezeigten Stellung um 90° nach oben verschwenkt, um einen Anschlag zu bilden. Es kann dann eine Kunststoffplatte von rechts zunächst zwischen die Klemmleiste 216 und den Klemmholm 215 und dann weiter nach vorn zwischen die Klemmleiste 220 und den darunter befindlichen vorderseitigen oberen Längsholm eingeschoben werden, bis sie mit ihrer Vorderkante an der Biegewange 223 zur Anlage kommt.

In der Steuereinrichtung wird nun der Abstand eingegeben, in dem die Biegelinie zur an der Biegewange 223 anliegenden freien Kante der Kunststoffplatte zu liegen kommen soll. Der weitere Ablauf wird dann entweder von Hand, also halbautomatisch, oder durch entsprechende Programmierung der Steuereinrichtung vollautomatisch gesteuert.

Zunächst wird die Kunststoffplatte in ihrer Stellung dadurch fixiert, dass die Klemmleiste 220 mit Vorspannung auf die Kunststoffplatte abgesenkt und gegen den darunter befindlichen Längsholm gepresst wird. Anschließend wird der Wagen 210 bei angehobener Klemmleiste 216 durch entsprechende Ansteuerung eines hier nicht näher gezeigten Positionierantrieb nach hinten, also von der Klemmleiste 220 weg verfahren, und zwar um einen solchen Betrag, dass die Heizschwerter 218, 219 nach dem Anhalten des Wagens 210 oberhalb der vorgesehenen Biegelinie zu stehen kommen. Die Kunststoffplatte wird dann durch Absenken der Klemmleiste 216 in Richtung auf den Klemmholm 215 festgeklemmt. Gleichzeitig werden die beiden Heizschwerter 212, 213 einander derart angenähert, bis sie an der Oberseite bzw. der Unterseite der Kunststoffplatte zur Anlage gekommen sind. Sie erhitzen dann den Kunststoff im Bereich der vorgesehenen Biegelinie so stark, dass er linienförmig plastifiziert und biegsam wird.

Wenn die Biegelinie genügend stark erhitzt ist, wird die Klemmleiste 220 der Klemmeinrichtung 221 angehoben. Nach Zurückschwenken der Biegewange 223 in die gezeigte Ausgangsstellung wird der Wagen 210 durch entsprechende Ansteuerung des Positionierantrieb wieder in Richtung auf die Biegewange 223 verfahren, wobei die Kunststoffplatte wegen der Fixierung zwischen der Klemmleiste 216 und dem Klemmholm 215 mitgenommen wird. Gleichzeitig werden die Heizschwerter 212, 213 von der Kunststoffplatte gelöst und so weit nach oben bzw. nach unten verfahren, dass sie beim weiteren Vorfahren des Wagens 210 nicht mit der Klemmeinrichtung 221 kollidieren können. Der horizontale Abstand zwischen den Heizschwertern 212, 213 und der Klemmleiste 216 und dem Klemmholm 215 ist so bemessen, dass die erhitzte Biegelinie bei Erreichen der vorderen Endstellung des Wagens 210 etwa oberhalb des Schwenkgelenks 222 zu liegen kommt.

Anschließend wird die Klemmeinrichtung 221 durch Absenken der Klemmleiste 220 zugefahren und damit die Kunststoffplatte festgeklemmt. Dann werden die Antriebsdruckzylinder 225 zwecks Einleitung des Biegevorgangs in der vorbeschriebenen Weise angesteuert, so dass die Biegewange 223 aus der in Figur 3 dargestellten Ausgangslage hochgeschwenkt wird. Hierdurch wird der auf der Biegewange 223 aufgeschobene Teil der Kunststoffplatte entsprechend hochgebogen, wobei durch geeignete Eingabe an die Steuereinrichtung jeder beliebige Biegewinkel einstellbar ist.

Unmittelbar nach Festklemmen der Kunststoffplatte an der Klemmeinrichtung 221, also noch während des Biegevorgangs, wird die Verklemmung der Kunststoffplatte zwischen Klemmholm 215 und Klemmleiste 216 wieder gelöst und der Wagen 210 mittels des Positionierzylinders nach hinten verfahren, bis die Heizschwerter 212, 213 wieder mit der nächsten vorgesehenen Biegelinie fluchten. Der Abstand zur ersten Biegelinie kann durch entsprechende Eingabe an die Steuereinrichtung festgelegt werden, d.h. dieser Abstand kann derselbe sein wie beim ersten Biegevorgang, es kann jedoch auch ein anderer Abstand vorgegeben werden. Nach Anhalten des Wagens 210 wird die Kunststoffplatte durch Absenken der Klemmleiste 216 festgeklemmt und werden die Heizschwerter 212, 213 von oben bzw. von unten an die Oberflächen der Kunststoffplatte zur Anlage gebracht.

Die Ausbildung einer weiteren Biegelinie erfolgt somit während des Biege- und Aushärtevorgangs an der vorangegangenen ersten Biegelinie. Wenn dieser Vorgang abgeschlossen ist und die neue Biegelinie hinreichend erhitzt ist, wiederholt sich der vorbeschriebene Ablauf, d.h. nach Öffnen der Klemmeinrichtung 221 wird der Wagen 210 bei abgesenkter Klemmleiste 216 in Richtung auf die Biegewange 223 verfahren, wobei die Heizschwerter 212, 213 von der Kunststoffplatte wegbewegt werden. Nach Erreichen der vorderen Endstellung des Wagens 210 schließt sich ein weiterer Biegevorgang in der vorbeschriebenen Weise an. Auf diese Weise kann - wenn gewünscht - ein geschlossener Hohlkörper gebildet werden, dessen einzige offene Stelle ein Schlitz ist, der anschließend von einer entsprechenden Schweißeinrichtung geschlossen werden kann.

## Patentansprüche

1. Heizeinrichtung für die Plastifizierung von Werkstücken aus einem thermoplastischen Kunststoff, wobei die Heizeinrichtung einen Heizkörper, z.B. in Form einer Heizplatte (1) oder eines Heizschwertes (129, 218, 219), aufweist, in dem zumindest ein Hohlraum (5, 6, 7, 8) vorgesehen ist, in den jeweils ein Heizelement eingesetzt ist, **dadurch gekennzeichnet, dass** der Heizkörper (1, 129, 218, 219) als Sandwichkörper ausgebildet ist, der eine Metallschaumschicht (2) aufweist, die auf zumindest einer Seitenfläche mit einer Massivmetallschicht (3, 4) bedeckt ist, wobei der zumindest eine Hohlraum (5, 6, 7, 8) in der Metallschaumschicht (2) eingeformt ist.

2. Heizeinrichtung nach Anspruch 1, **dadurch gekennzeichnet, dass** die Metallschaumschicht (2) auf zwei gegenüber liegenden Seitenflächen mit einer Massivmetallschicht (3, 4) versehen ist, insbesondere die Metallschaumschicht (2) an zumindest einer der die Seitenflächen verbindenden Querflächen abgedeckt ist.

3. Heizeinrichtung nach Anspruch 2, **dadurch gekennzeichnet, dass** der zumindest eine Hohlraum (5, 6, 7, 8) in der Mittelebene zwischen den beiden Massivmetallschichten verläuft.

4. Heizeinrichtung nach einem der Ansprüche 1 bis 3, **dadurch gekennzeichnet, dass** mehrere Hohlräume (5, 6, 7, 8) mit Heizelementen darin vorgesehen sind, vorzugsweise gleichmäßig in einer zur Massivmetallschicht (3, 4) parallelen Ebene.

5. Heizeinrichtung nach einem der Ansprüche 1 bis 4, **dadurch gekennzeichnet, dass** die Massivmetallschicht bzw. die Massivmetallschichten (3, 4) metallisch mit der Metallschaumschicht (2) verbunden sind.

6. Heizeinrichtung nach einem der Ansprüche 1 bis 5, **dadurch gekennzeichnet, dass** das Material für die Metallschaumschicht (2) und/oder die Massivmetallschicht bzw. Massivmetallschichten (3, 4) Aluminium bzw. eine Aluminiumlegierung ist.

7. Heizeinrichtung nach einem der Ansprüche 1 bis 6, **dadurch gekennzeichnet, dass** die Massivmetallschicht bzw. Massivmetallschichten (3, 4) an ihrer jeweiligen Außenseite mit einer Anti-Haft-Beschichtung, beispielsweise aus PTFE oder aus einer Nickelbasishartlegierung versehen ist bzw. sind.

8. Heizeinrichtung nach einem der Ansprüche 1 bis 7, **dadurch gekennzeichnet, dass** das Heizeinrichtung mit einer Temperaturregelung versehen ist, insbesondere einer thermostatischen oder elektronischen Temperaturregelung.

9. Heizeinrichtung nach Anspruch 8, **dadurch gekennzeichnet, dass** in der Metallschaumschicht (2), vorzugsweise in der Mittelebene, ein Temperaturfühler angeordnet ist, der mit der Temperaturregelung verbunden ist.

10. Heizeinrichtung nach Anspruch 8 oder 9, **dadurch gekennzeichnet, dass** der Sandwichkörper (1) an einer Halterung angebracht ist, die mit der Temperaturregelung versehen ist, insbesondere die Halterung einen Handgriff zur Handhabung der Heizeinrichtung oder als Tischhalterung ausgebildet ist.

11. Heizeinrichtung nach einem der Ansprüche 1 bis 10, **dadurch gekennzeichnet, dass** die Heizeinrichtung Teil einer Maschine zur thermischen Bearbeitung von Werkstücken aus thermoplastischem Kunststoff, insbesondere von Kunststoffplatten, ist, wobei die Maschine (101, 201) eine Aufnahme für das Werkstück bzw. die Werkstücke und zumindest ein Heizschwert (129, 218, 219) aufweist, welches zwischen einer Warteposition außerhalb des Bereichs der Werkstückaufnahme und einer Heizposition im Bereich der Werkstückaufnahme bewegbar geführt ist und welches zwei einander abgewandte Seitenflächen sowie eine Ober- und eine Unterseite aufweist, wobei das Heizschwert den Sandwichkörper (1) bildet.

12. Verwendung des Heizeinrichtunges nach einem der Ansprüche 1 bis 11 zur Plastifizierung von Werkstücken aus einem thermoplastischem Kunststoff.

13. Maschine (101, 201) zur thermischen Bearbeitung von Werkstücken aus einem thermoplastischen Kunststoff, mit einer Werkstückaufnahme für das Werkstück bzw. die Werkstücke und mit einer Heizeinrichtung, die zumindest einen Heizkörper in Form eines Heizschwertes (129, 218, 219) aufweist, welches zwischen einer Warteposition außerhalb des Bereichs der Werkstückaufnahme und einer Heizposition im Bereich der Werkstückaufnahme bewegbar geführt ist und welches zwei einander abgewandte Seitenflächen als Heizflächen aufweist, **dadurch gekennzeichnet, dass** die Heizeinrichtung nach einem der Ansprüche 1 bis 11 ausgebildet ist.

14. Maschine nach Anspruch 13, **dadurch gekennzeichnet, dass** die Maschine als Stumpfschweißmaschine (101) zum Verschweißen der Stirnseiten der Werkstücke ausgebildet ist, die mit zwei gegenüber liegenden, einen Spalt zwischen sich ausbildenden und relativ zueinander beweglichen Spanneinrichtungen (115, 116) zum Fixieren und zum Zusammenführen der zu verschweißenden Werkstücke in einer Spannebene ausgebildet ist, wobei das zumindest eine Heizschwert (129) sich längst des Spaltes erstreckt und wobei sich das Heizschwert (129) in der Warteposition außerhalb der Spannebene und in der Heizposition im Bereich der Spannebene befindet.

15. Maschine nach Anspruch 13, **dadurch gekennzeichnet, dass** die Maschine als Biegemaschine (201) zum Biegen eines plattenförmigen Kunststoffwerkstückes um eine Biegelinie ausgebildet ist, wobei die Biegemaschine (201) eine Biegeeinrichtung aufweist, der das zumindest eine Heizschwert (218, 219) derart zugeordnet ist, dass in der Heizposition das Kunststoffwerkstück im Bereich der Biegelinie erhitzbar ist.

## Claims

1. A heating device for the plastification of workpieces made of a thermoplastic material, the heating device having a heating component, e.g. in the form of a heating plate (1) or a heating blade (129, 218, 219) in which at least one cavity (5, 6, 7, 8) is provided into which a respective heating element is inserted, **characterised in that** the heating component (1, 129, 218, 219) is in the form of a sandwich element that has a metal foam layer (2) which is covered on at least one side face with a solid metal layer (3, 4), the at least one cavity (5, 6, 7, 8) being moulded into the metal foam layer (2).

2. The heating device according to Claim 1, **characterised in that** the metal foam layer (2) is provided on two opposite side faces with a solid metal layer (3, 4), in particular the metal foam layer (2) is covered on at least one of the transverse faces connecting the side faces.

3. The heating device according to Claim 2, **characterised in that** the at least one cavity (5, 6, 7, 8) runs in the centre plane between the two solid metal layers.

4. The heating device according to any of Claims 1 to 3, **characterised in that** a number of cavities (5, 6, 7, 8) with heating elements within them are provided, preferably evenly in a plane parallel to the solid metal layer (3, 4).

5. The heating device according to any of Claims 1 to 4, **characterised in that** the solid metal layer or the solid metal layers (3, 4) are connected metallically to the metal foam layer (2).

6. The heating device according to any of Claims 1 to 5, **characterised in that** the material for the metal foam layer (2) and/or the solid metal layer or solid metal layers (3, 4) is aluminium or an aluminium alloy.

7. The heating device according to any of Claims 1 to 6, **characterised in that** the solid metal layer or solid metal layers (3, 4) is/are provided on its/their respective outside with an anti-stick coating, for example made of PTFE or a nickel-based hard alloy.

8. The heating device according to any of Claims 1 to 7, **characterised in that** the heating device is provided with temperature control, in particular thermostatic or electronic temperature control.

9. The heating device according to Claim 8, **characterised in that** a temperature sensor that is connected to the temperature control is disposed in the metal foam layer (2), preferably in the centre plane.

10. The heating device according to Claim 8 or 9, **characterised in that** the sandwich element (1) is attached to a holder that is provided with the temperature control, in particular the holder is a handle for handling the heating device or is in the form of a table mounting.

11. The heating device according to any of Claims 1 to 10, **characterised in that** the heating device is part of a machine for the thermal machining of workpieces made of thermoplastic material, in particular plastic plates, the machine (101, 201) having a retainer for the workpiece or the workpieces and at least one heating blade (129, 218, 219) which can be guided moveably between a waiting position outside of the region of the workpiece retainer and a heating position in the region of the workpiece retainer, and which has two side faces facing away from one another and an upper and a lower side, the heating blade forming the sandwich element (1).

12. The use of the heating device according to any of Claims 1 to 11 for the plastification of workpieces made of a thermoplastic material.

13. A machine (101, 201) for the thermal machining of workpieces made of a thermoplastic material, comprising a workpiece retainer for the workpiece or the workpieces and a heating device which has at least one heating component in the form of a heating blade (129, 218, 219) which is guided moveably between a waiting position outside of the region of the workpiece retainer and a heating position in the region of the workpiece retainer, and which has two side faces facing away from one another as heating surfaces, **characterised in that** the heating device is formed according to any of Claims 1 to 11.

14. The machine according to Claim 13, **characterised in that** the machine is in the form of a butt fusion machine (101) for welding the face sides of the workpieces and which is formed with two tensioning devices (115, 116) lying opposite one another, forming a gap between them and that can move relative to one another in order to fix and bring together the workpieces to be welded in a clamping plane, the at least one heating blade (129) extending along the gap and the heating blade (129) being located outside of the clamping plane in the waiting position and in the region of the clamping plane in the heating position.

15. The machine according to Claim 13, **characterised in that** the machine is in the form of a bending machine (201) for bending a plate-shaped plastic workpiece around a bending line, the bending machine (201) having a bending device to which the at least one heating blade (218, 219) is assigned such that the plastic workpiece can be heated in the region of the bending line in the heating position.

## Revendications

1. Dispositif chauffant destiné à la plastification de pièces réalisées en une matière thermoplastique, ledit dispositif chauffant comportant un corps chauffant, par exemple sous forme d'une plaque chauffante (1) ou d'une lame chauffante (129, 218, 219), dans lequel est ménagée au moins une cavité (5, 6, 7, 8), chacune de ces dernières renfermant un élément chauffant, **caractérisé en ce que** le corps chauffant (1, 129, 218, 219) est réalisé sous forme d'un corps sandwich comportant une couche en mousse métallique (2) dont au moins une face latérale est recouverte d'une couche en métal massif (3, 4), l'au moins une cavité (5, 6, 7, 8) étant formée au sein de la couche en mousse métallique (2).

2. Dispositif chauffant selon la revendication 1, **caractérisé en ce que** la couche en mousse métallique (2) est pourvue, sur deux faces latérales opposées, d'une couche en métal massif (3, 4), la couche en mousse métallique (2) étant notamment recouverte sur au moins une des faces transversales reliant lesdites faces latérales.

3. Dispositif chauffant selon la revendication 2, **caractérisé en ce que** l'au moins une cavité (5, 6, 7, 8) s'étend dans le plan médian entre les deux couches en métal massif.

4. Dispositif chauffant selon l'une des revendications 1 à 3, **caractérisé en ce qu'**il comporte plusieurs cavités (5, 6, 7, 8) pourvues d'éléments chauffants, disposées de préférence régulièrement dans un plan parallèle à la couche en métal massif (3, 4).

5. Dispositif chauffant selon l'une des revendications 1 à 4, **caractérisé en ce que** la couche en métal massif ou les couches en métal massif (3, 4) comporte(nt) une liaison métallique avec la couche en mousse métallique (2).

6. Dispositif chauffant selon l'une des revendications 1 à 5, **caractérisé en ce que** le matériau mis en oeuvre pour la couche en mousse métallique (2) et/ou la couche en métal massif ou les couches en métal massif (3, 4) est de l'aluminium ou un alliage d'aluminium.

7. Dispositif chauffant selon l'une des revendications 1 à 6, **caractérisé en ce que** la couche en métal massif ou chacune des couches en métal massif (3, 4) est pourvue, sur son respective côté extérieur, d'un revêtement antiadhésif réalisé, par exemple, en PTFE ou en un alliage dur à base de nickel.

8. Dispositif chauffant selon l'une des revendications 1 à 7, **caractérisé en ce que** ledit dispositif chauffant est pourvu d'un système de régulation thermique, notamment d'un système de régulation thermique fonctionnant grâce à un thermostat ou de manière électronique.

9. Dispositif chauffant selon la revendication 8, **caractérisé en ce qu'**une sonde de température, laquelle est reliée audit système de régulation thermique, est disposée dans la couche en mousse métallique (2), de préférence dans ledit plan médian.

10. Dispositif chauffant selon les revendications 8 ou 9, **caractérisé en ce que** le corps sandwich (1) est monté sur un support qui est pourvu dudit système de régulation thermique, ledit support formant notamment une poignée, destinée à manipuler ledit dispositif chauffant, ou un support de table.

11. Dispositif chauffant selon l'une des revendications 1 à 10, **caractérisé en ce que** ledit dispositif chauffant fait partie d'une machine servant à l'usinage thermique de pièces en matière thermoplastique, notamment de plaques en matière plastique, la machine (101, 201) comportant un logement destiné à ladite pièces ou lesdites pièces, et au moins une lame chauffante (129, 218, 219) laquelle est mobile de manière à pouvoir être guidée entre une position d'attente située en dehors de la zone du logement pour pièces et une position de chauffe située dans la zone du logement pour pièces, et laquelle comporte deux faces latérales opposées ainsi qu'une face supérieure et une face inférieure, ladite lame chauffante formant le corps sandwich (1).

12. Utilisation du dispositif chauffant selon l'une des revendications 1 à 11 pour plastifier des pièces réalisées en une matière thermoplastique.

13. Machine (101, 201) permettant d'usiner thermiquement des pièces réalisées en une matière thermoplastique, pourvue d'un logement pour pièces destiné à ladite pièce ou lesdites pièces et d'un dispositif chauffant comportant au moins un corps chauffant en forme d'une lame chauffante (129, 218, 219) laquelle est mobile de manière à pouvoir être guidée entre une position d'attente située en dehors de la zone du logement pour pièces et une position de chauffe située dans la zone du logement pour pièces, et laquelle comporte deux faces latérales opposées servant de faces de chauffe, **caractérisée en ce que** ledit dispositif chauffant est réalisé selon l'une des revendications 1 à 11.

14. Machine selon la revendication 13, **caractérisée en ce que** ladite machine est réalisée sous forme d'une machine à souder bout à bout (101) laquelle est destinée à relier par soudage les faces frontales desdites pièces et laquelle est pourvue de deux dispositifs de serrage (115, 116) opposés qui forment entre eux un interstice et qui sont mobiles l'un par rapport à l'autre, permettant ainsi de fixer et de joindre les pièces à relier par soudage dans un plan de serrage, l'au moins une lame chauffante (129) s'étendant le long dudit interstice, et la lame chauffante (129) étant située, en position d'attente, en dehors dudit plan de serrage et, en position de chauffe, au niveau du plan de serrage.

15. Machine selon la revendication 13, **caractérisée en ce que** ladite machine est réalisée sous forme une machine à plier (201) destinée à plier, autour d'une ligne de pliage, une pièce en matière plastique ayant la forme d'une plaque, la machine à plier (201) présentant un dispositif de pliage auquel l'au moins une lame chauffante (218, 219) est associée de manière à pouvoir chauffer, en position de chauffe, la pièce en matière plastique au niveau de la ligne de pliage.
